# EUROPEAN PATENT SPECIFICATION

(11) **EP 3 702 185 B1**
(45) Date of publication and mention of the grant of the patent: **25.03.2026**
(21) Application number: 19192496.8
(22) Date of filing: 20.08.2019
(51) Int. Cl.: B60H 1/34

(54) **AIR OUTLET DEVICE, AIR CONDITIONING SYSTEM, AND VEHICLE**
LUFTAUSLASSVORRICHTUNG, KLIMAANLAGE UND FAHRZEUG
DISPOSITIF DE SORTIE D'AIR, SYSTÈME DE CLIMATISATION ET VÉHICULE

(30) Priority: 27.02.2019 CN 201910147005
(43) Date of publication of application: 02.09.2020
(73) Proprietor: Ningbo Joysonquin Automotive Systems Holding Co., Ltd, 315000 Ningbo Zhejiang (CN)
(72) Inventor: Xu, Jinbiao, Ningbo, Zhejiang 315000 (CN); Su, Changqing, Ningbo, Zhejiang 315000 (CN)
(74) Representative: Loo, Chi Ching

(56) References cited:
- EP-A1- 3 290 245
- WO-A1-2018/108690
- CN-A- 108 556 596
- DE-A1- 102017 113 906

## Description

### BACKGROUND OF THE INVENTION

### Field of the Invention

This invention relates to an air outlet device, an air conditioning system, and a vehicle.

### Description of the Related Art

At present, an air conditioning system is already a standard configuration for most vehicles. In particular, the air conditioning device of a car has become one of the indicators for measuring the completeness of the function of cars. In the design of the air conditioning system of the car, the car ventilation system is composed of an air outlet and an air duct, playing the role of sending the treated air to the cockpit of the car to realize the functions of cooling, heating, defogging, defrosting, and purifying the air.

However, the function of the present air outlet of the car is single, and a primary vane and a secondary vane are required to realize the left-right ventilation and the up-down ventilation. The air outlet uses the primary vane and the secondary vane to adjust the up-down and left-right directions of the wind respectively to ensure the blowing range. The primary vane and the secondary vane are generally exposed on the surface of the air outlet, which creates a large visual conflict with the instrument panel and cannot achieve a concealing visual effect. In addition, the air outlet requires a separate damper structure to achieve the effect of controlling the air volume. WO2018108690, EP3290245, and DE102017113906 disclose an air vent. CN108556596 discloses an air outlet assembly of an automotive air conditioner.

### BRIEF SUMMARY OF THE INVENTION

In order to overcome at least one deficiency of the prior art, this invention provides an air outlet device, an air conditioning system, and a vehicle.

In order to achieve the above-mentioned objectives, this invention provides an air outlet device as claimed in claim 1.

Optionally, the first air duct and the second air duct both may be curved, an end of the first air duct may bend towards the second air duct, and an end of the second air duct may bend towards the first air duct.

This invention also provides an air conditioning system, including the air outlet device mentioned above, the air conditioning system has an outlet, and the first air inlet and the second air inlet both are in communication with the outlet.

This invention also provides a vehicle, including the air outlet device mentioned above, the vehicle further includes an air conditioning system and a vehicle interior, the air conditioning system has an outlet, the first air inlet and the second air inlet both are in communication with the outlet, and the first air outlet and the second air outlet both are disposed at the vehicle interior.

The air outlet device provided by the present invention has two air ducts, the first air duct and the second air duct, and these two air ducts are more operable than one air duct of the prior art. At the same time, the air guiding structure is used to replace the air valve of the prior art, and the relative size of the first air inlet and the second air inlet can be adjusted by adjusting the air guiding structure, thereby adjusting flow rate of the fluid inside the first air duct and the second air duct. In the prior art, two air valves need to be provided for the two air ducts. However, the air guiding structure of the air outlet device of the present invention can replace these two air valves with just only one, so the structure is simpler. Further, the air valves of the prior art are generally disposed at the air outlet of the air outlet device while the air guiding structure of the air outlet device of the present invention is disposed at a position close to the first air inlet and the second air inlet, so the air guiding structure can be completely hidden inside the air outlet device, which is more beautiful and can be free from falling ash. Secondly, the first air duct and the second air duct in the present invention both are provided with one direction adjustment structure to adjust the first direction of an air out of the first air outlet and the second air outlet.

In addition, the present invention does not need to use the secondary vanes of the prior art, and utilizes the curved first air duct and the curved second air duct to guide the wind, which brings the aesthetic effect of concealing the outlet while reducing the development cost of the secondary vanes.

The air guiding structure with a special structural shape cooperate with the first air duct and the second air duct. It not only regulates the upper or lower air guiding, but also realizes the function of switching the wind.

The first housing and the second housing have a special shape, the inner wall is concave, and the air guiding structure is assisted. The opening of the first air duct and the second air duct is diagonally opposite, shielding the vanes, and achieving a hidden effect perfectly.

### BRIEF DESCRIPTION OF THE DRAWINGS

FIG. 1 is a sectional view of an air outlet device by embodiment one not in accordance with this invention;
FIG. 2 is a first schematic diagram by embodiment one not in accordance with this invention;
FIG. 3 is a second schematic diagram by embodiment one not in accordance with this invention;
FIG. 4 is a third schematic diagram by embodiment one not in accordance with this invention;
FIG. 5 is a fourth schematic diagram by embodiment one not in accordance with this invention;
FIG. 6 is a fifth schematic diagram by embodiment one not in accordance with this invention;
FIG. 7 is a sixth schematic diagram by embodiment one not in accordance with this invention;
FIG. 8 is a first schematic diagram of a direction adjustment structure by embodiment one not in accordance with this invention;
FIG. 9 is a second schematic diagram of the direction adjustment structure by embodiment one not in accordance with this invention;
FIG. 10 is a third schematic diagram of the direction adjustment structure by embodiment one not in accordance with this invention;
FIG. 11 is a schematic view of a first outlet and a second air outlet of the air outlet device by embodiment one not in accordance with this invention;
FIG. 12 is a sectional view of an air outlet device by embodiment two in accordance with this invention;
FIG. 13 is a first schematic diagram by embodiment two in accordance with this invention;
FIG. 14 is a second schematic diagram by embodiment two in accordance with this invention;
FIG. 15 is a third schematic diagram by embodiment two in accordance with this invention;
FIG. 16 is a fourth schematic diagram by embodiment two in accordance with this invention;
FIG. 17 is a fifth schematic diagram by embodiment two in accordance with this invention;
FIG. 18 is a sixth schematic diagram by embodiment two in accordance with this invention;
FIG. 19 is a first schematic diagram of a direction adjustment structure by embodiment two in accordance with this invention;
FIG. 20 is a second schematic diagram of the direction adjustment structure by embodiment two in accordance with this invention;
FIG. 21 is a schematic view of the direction adjustment structure by embodiment two in accordance with this invention;
FIG. 22 is a schematic view of the air outlet device by embodiment two in accordance with this invention;
FIG. 23 is a cross-sectional view taken along line A-A of Figure 22;
FIG. 24 is a perspective view of the air outlet device by embodiment two in accordance with this invention;
FIG. 25 is a first schematic diagram of an air outlet device by embodiment three not in accordance with this invention;
FIG. 26 is a second schematic diagram of the air outlet device by embodiment three not in accordance with this invention;
FIG. 27 is a third schematic diagram of the air outlet device by embodiment three not in accordance with this invention; and
FIG. 28 is a fourth schematic diagram of the air outlet device by embodiment three not in accordance with this invention.

### DETAILED DESCRIPTION OF THE INVENTION

These and other objects, features and advantages of the present invention will become better understood with the following embodiments, accompanying drawings and description in detail.

A relative size of a first air inlet and a second air inlet in this invention refers to a ratio of a cross-sectional area S1 of the first air inlet and a cross-sectional area S2 of the second air inlet (which is shortly for S1:S2). A cross section of the first air inlet refers to a surface perpendicular to a flowing direction of fluid inside the first air inlet, and a cross section of the second air inlet refers to a surface perpendicular to a flowing direction of fluid inside the second air inlet.

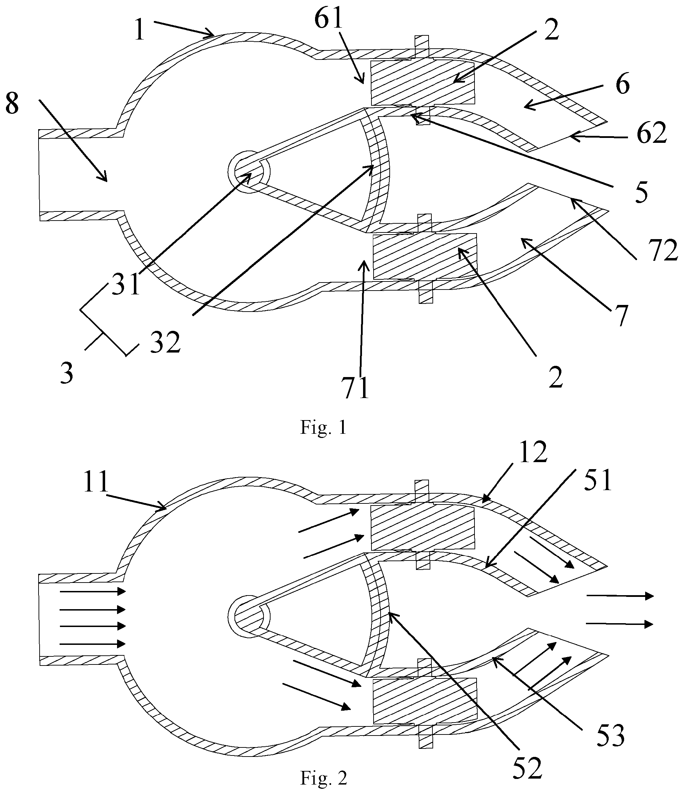

A first direction of this invention refers to a direction perpendicular to a cross-sectional view of Fig. 1, and a second direction of this invention refers to a direction parallel to a cross-sectional view of Fig. 1.

### Embodiment One, not in accordance with the present invention

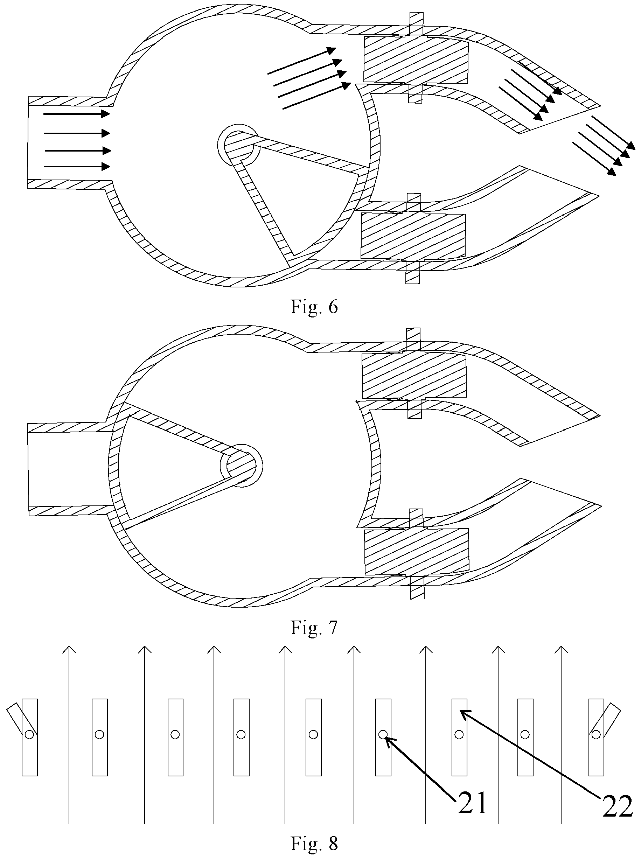

Please refer to Fig. 1 to Fig. 11. A cross section in the cross-sectional view of Fig.1 is parallel to a flowing direction of fluid inside an air outlet device, Fig. 2 to Fig. 7 are the schematic diagrams in the direction of the cross section in the cross-sectional view of Fig. 1, and an cross section of a direction adjustment structure in Fig. 8 to Fig. 10 is perpendicular to the cross section in the cross-sectional view of Fig. 1. The direction of the black arrows in Fig. 2 to Fig. 10 refer to a flowing direction of fluid, and the number of arrows refers to a flow rate of the fluid.

As shown in Fig.1, embodiment one provides an air outlet device, the air outlet device includes a first air duct 6, a second air duct 7, an air guiding structure 3, and a direction adjustment structure 2. The first air duct 6 has a first air inlet 61 and a first air outlet 62, and the second air duct 7 has a second air inlet 71 and a second air outlet 72. The air guiding structure 3 is used for adjusting a relative size of the first air inlet 61 and the second air inlet 71. The first air duct 6 and the second air duct 7 both are provided with the direction adjustment structure 2 to adjust the first direction of air out of the first air outlet 62 and the second air outlet 72. An angle between the first air outlet 62 and a flat surface of this embodiment refers to an angle between a connecting line and the flat surface, the connecting line is disposed between an end point of a first housing 1 and an end point of a second housing 5.

The air outlet device provided by embodiment one has two air ducts, the first air duct 6 and the second air duct 7, and these two air ducts are more operable than one air duct of the prior art. At the same time, the air guiding structure 3 is used to replace the air valve of the prior art, and the relative size of the first air inlet 61 and the second air inlet 71 can be adjusted by adjusting the air guiding structure 3, thereby adjusting flow rate of the fluid inside the first air duct 6 and the second air duct 7. In the prior art, two air valves need to be provided for the two air ducts. However, the wind guiding structure 3 of the present embodiment can replace these two air valves with just only one, so the structure is simpler. Further, the air valves of the prior art are generally disposed at the air outlet of the air outlet device while the air guiding structure 3 of the present embodiment is disposed at a position close to the first air inlet 61 and the second air inlet 71, so the air guiding structure 3 can be completely hidden inside the air outlet device, which is more beautiful and can be free from falling ash. Secondly, the first air duct 6 and the second air duct 7 in the present embodiment both are provided with the direction adjustment structure 2 to adjust the first direction of an air out of the first air outlet 62 and the first direction of an air out of the second air outlet 72. The first direction in this embodiment refers to a left-right direction, but the present embodiment does not limit the first direction, the first direction may also be an up-down direction depending on the position of the air outlet device.

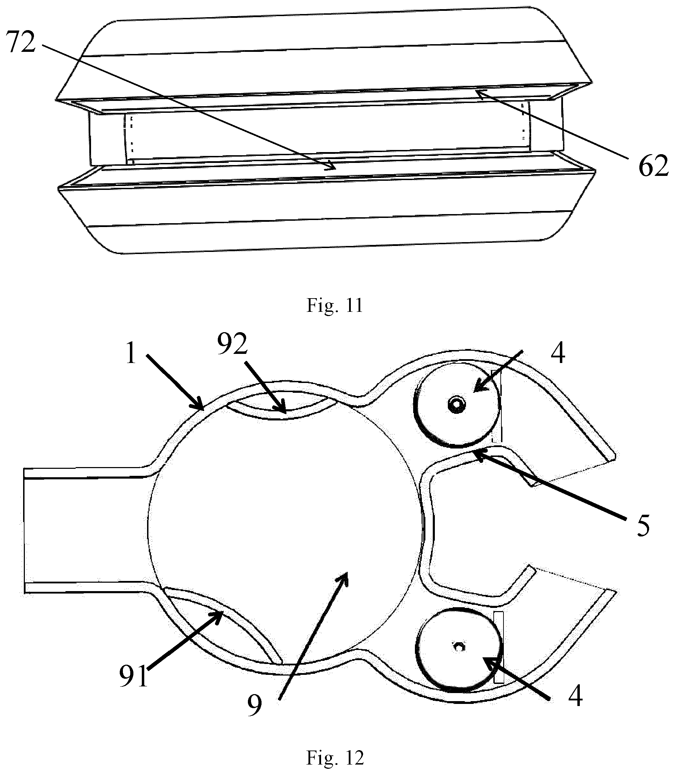

Further, an end of the first air duct 6 in this embodiment bend towards the second air duct 7, and an end of the second air duct 7 bend towards the first air duct 6. The curved first air duct 6 and the curved second air duct 7 cooperate with the air guiding structure 3, to adjust a second direction of an air out of the first air outlet 62 and the second air outlet 72. In this embodiment, the second direction refers to an up-down direction. As a result, the air outlet device provided by this embodiment has a function of simultaneously adjusting the first direction and the second direction of a fluid such as air. Meanwhile, the curved first air duct 6 and the curved second air duct 7 can cover the direction adjustment structure 2 which is disposed inside them, as shown in Fig. 11, an internal structure of the air outlet device is completely invisible, and the concealing function is provided.

In this embodiment, the air outlet device has a flat surface. The flat surface refers to a surface parallel to a flowing direction of fluid inside an overall air inlet, and the flat surface is perpendicular to a cross section in Fig. 1. The angle is disposed between the first air outlet 62 and the flat surface. The angle is an acute angle. When the angle between the first air outlet 62 and the flat surface is an acute angle, it can be ensured that the flowing direction of the fluid flowing out the first air outlet 62 and the second air outlet 72 flows outward (far away from the direction of the first air outlet 62 and the first air duct 6), which won't cause a situation where the fluid blows toward the inside of a curve member of the curved first air duct 6.

In this embodiment, the air outlet device further includes a first housing 1 and a second housing 5, and the second housing 5 has a first section 51 and a second section 53. The first section 51 and the first housing 1 cooperate with each other to form the first air duct 6, and the second section 53 and the first housing 1 cooperate with each other to form the second air duct 7. This embodiment only needs four structures of the first housing 1, the second housing 5, the direction adjustment structure 2, and the air guiding structure 3, so the structure is simple. In this embodiment, there are two housings, the first housing 1 and the second housing 5, respectively. But in other embodiments, the air outlet device may also be formed by one housing in one piece, or by three, four or any number of housings.

As shown in Fig 2, in this embodiment, the second housing 5 further includes the third section 52. Two ends of the third section 52 are connected to the first section 51 and the second section 53 respectively, the first section 51, the second section 53, and the third section 52 can be in one piece or be detachably connected. The third section 52 and the air guiding structure 3 cooperate with each other to adjust the relative size of the first air inlet 61 and the second air inlet 71.

In this embodiment, the first housing 1 includes an air guiding section 11 and an air duct section 12. The third section 52 and the air guiding section 11 of the first housing 1 cooperate with each other to form an air guiding chamber, and a shape of a cross section of the air guiding section 11 is a round or nearly round. The air outlet device has an overall air inlet 8, and the air guiding chamber is in communication with the overall air inlet 8, the first air inlet 61, and the second air inlet 71 respectively. The first section 51 and the air duct section 12 of the first housing 1 cooperate with each other to form the first air duct 6, the second section 53 and the air duct section 12 of the first housing 1 cooperate with each other to form the second air duct 7.

In this embodiment, a shape of a cross section of the second housing 5 is similar to a "C" shape, and the first section 51 and the second section 53 both are in an arc shape. A shape of a cross section of the air duct section 12 is also in an arc shape, to achieve a curve of the first air duct 6 and the second air duct 7. In other embodiments, the first section 51 and the second section 53 may also be in any other curved shapes, such as a fold line shape, an obtuse angle shape, an acute angle shape, a right angle shape and so on. The shape of the air duct section 12 is preferably the same as the first section 51 and the second section 53. The third section 52 is curved in a cross section in Fig.1. In other embodiments, the shape of the cross section in Fig. 1 may also be any other shape that cooperates with the wind guiding structure 3.

In this embodiment, the air guiding structure 3 is disposed in the air guiding chamber. The air guiding structure 3 includes a cover member 32, and the air guiding structure 3 has a first rotational axis 31. The air guiding structure 3 is rotatable disposed about the first rotational axis 31 to achieve the function of the cover member 32 to close or partially close or open the overall air inlet 8, the first air inlet 61, and the second air inlet 71. In this embodiment, the air guiding structure 3 controls the rotation of the cover member 32 to close or partially close or open the overall air inlet 8, the first air inlet 61, and the second air inlet 71. In other embodiments, it is also possible to achieve the closing or partial closing or opening of the overall air inlet 8, the first air inlet 61, and the second air inlet 71 by the translation, folding and other actions of the air guiding structure 3. In this embodiment, the volume of the air guiding structure 3 is much smaller than a volume of the air guiding chamber, and a number of the air guiding structure 3 is only one. In other embodiments, the number of the air guiding structure 3 may also be two, three or more. When the number of the air guiding structure 3 is three, three air guiding structures are used to cover the overall air inlet 8, the first air inlet 61, and the second air inlet 71, respectively. In this embodiment, a cross section of the cover member 32 in the Figures is a sector, the sector has a length of arc, and the length of arc is longer than a length of the third section 52, or the length of arc equal to a length of the third section 52. The overall air inlet 8, the first air inlet 61, and the second air inlet 71 all have an inner diameter, and the length of arc is longer than the inner diameter of the overall air inlet 8, the inner diameter of the first air inlet 61, and the inner diameter of the second air inlet 71. The length of arc is longer than the inner diameter of the overall air inlet to achieve the total closing of the overall air inlet 8. The length of arc is longer than the inner diameter of the first air inlet 61 and the inner diameter of the second air inlet 71 to achieve the total closing of the first air inlet 61 and the second air inlet 71. However, in other embodiments, the cross section of the cover member 32 in the figures can be any shape such as a curved shape, a triangular shape, a square shape, or the like that can conceal the total air inlet 8, the first air inlet 61, and the second air inlet 71. Although the inner diameter is used in the present embodiment to describe the size of the overall air inlet 8, the first air inlet 61, and the second air inlet 71, the present embodiment does not limit the description of the size.

In other embodiments, the cross section of the overall air inlet 8, the first air inlet 61, and the second air inlet 71 all may be rectangular, near-rectangular, hexagonal, or the like. When the cross section of the overall air inlet 8, the first air inlet 61, and the second air inlet 71 is a square, the size of the overall air inlet 8, the first air inlet 61, and the second air inlet 71 may be described by a width; when the cross section of the overall air inlet 8, the first air inlet 61, and the second air inlet 71 is a triangle, the size of the overall air inlet 8, the first air inlet 61, and the second air inlet 71 may be described by a length.

The principle of using the curved first air duct 6, the curved second air duct 7, and the air guiding structure 3 is as follows:
When the cover member 32 cover the first air outlet 62 and the second air outlet 72 simultaneously, and S1: S2 is equal to or approximately equal to 1, as shown in Fig. 2, the fluid flowing out the first air outlet 62 and the second air outlet 72 cancels each other in the second direction (up-down direction) and is finally blown out horizontally.

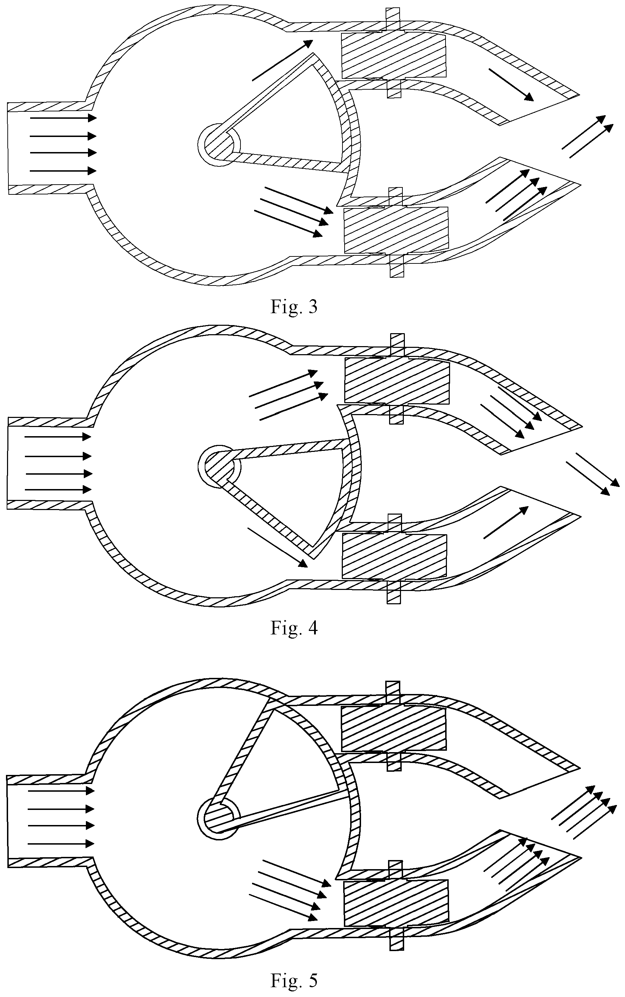

As shown in Fig. 3, rotate the air guiding structure 3 a small angle counterclockwise to close most of the first air outlet 62, so most of the air is assigned to the second air duct 7 and S1: S2 is much smaller than 1. Due to the curved first air duct 6 and the curved second air duct 7, a small part of the air of the first air duct 6 is offset, so the wind direction at the final outlet is still at an upward angle.

As shown in Fig. 4, rotate the air guiding structure 3 a small angle clockwise to close most of the second air outlet 72, so most of the air is assigned to the first air duct 6, and S1: S2 is much bigger than 1. Due to the curved first air duct 6 and the curved second air duct 7, a small part of the air of the second air duct 7 is offset, so the wind direction at the final outlet is still at a downward angle. As shown in Fig. 5, rotate the air guiding structure 3 a small angle counterclockwise to close the first air outlet 62, so all the air is assigned to the second air duct 7 and S1=0. At this time, the wind blown out will blow upward at the maximum limit angle to achieve an effect of blowing up, and finally realize the upward air guiding function.

As shown in Fig. 6, rotate the air guiding structure 3 a small angle clockwise to close the second air outlet 72, so all the air is assigned to the first air duct 6 and S2= 0. At this time, the wind blown out will blow downward at the maximum limit angle to achieve an effect of blowing down, and finally realize the downward air guiding function.

As shown in Fig. 7, when the air guiding structure 3 is rotated to completely close the total air inlet 8, the air outlet is closed at this time.

In this embodiment, the direction adjustment structure includes vanes 22 and a second rotational axis 21. Vanes 22 are all disposed at the second rotational axis 21, and the vanes 22 rotate with the rotation of the second rotational axis 21.

In this embodiment, the second rotational axis 21 is perpendicular to the first rotating shaft 31. A shape of the vane 22 in this embodiment is a rectangular shape and is plat.

In other embodiments, the vane 22 may also be round, nearly round, irregular, and any other shapes that is adapted to the shape of the first air duct 6. The direction adjustment structure has a plurality of the second rotational axis 21. When one of the second rotational axis 21 is damaged or blocked, the other second rotational axis 21 can still maintain the working state without affecting each other. In the present embodiment, only one kind of vane 22 is needed, and the first direction and the second direction of the wind are adjusted without a secondary vane. Finally, the wind direction adjustment of up, down, left, and right directions is realized, the structure is simple, and the function is complete.

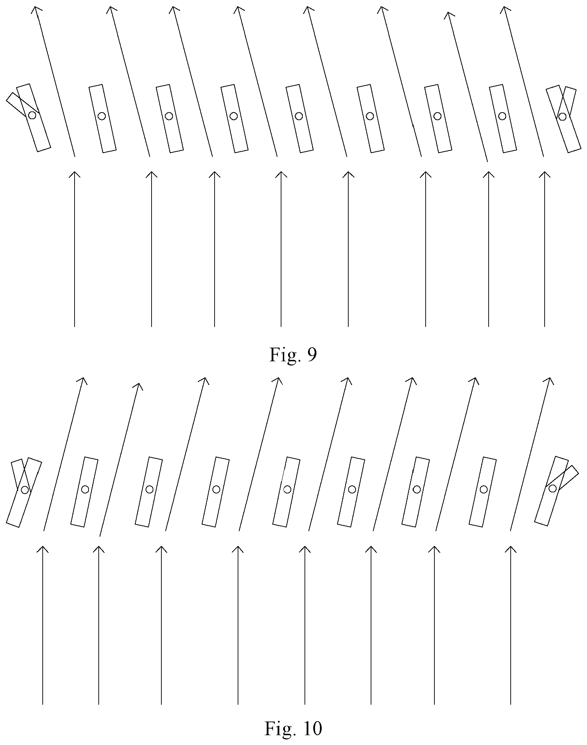

When the vanes 22 are parallel to a fluid flowing air duct, the fluid is blown in the middle, as shown in Fig. 8. When all the vanes 22 rotate counterclockwise, the fluid is blown to the left, as shown in Fig. 9. When all the vanes 22 rotate clockwise, the airflow is blown to the right, as shown in Fig. 10. But In other embodiments, the vanes 22 can also be rotated separately. For example, the vanes 22 near the left rotate counterclockwise, the middle position remains stationary, and the vanes 22 near the right rotate clockwise. Thus, the position of the left, middle, and right are blown by the wind.

The rotation of the first rotational axis 31 and the second rotational axis 21 in the present embodiment may be manually adjusted or electrically adjusted. Manual adjustment can save the motor and the structure is simple. If it is electrically adjusted, it is more labor-saving during the adjustment. The rotation of the first rotational axis 31 and the second rotational axis 21 can be automatically controlled by the human-computer interaction system or the ambient temperature.

The direction adjustment structure 2 of the present embodiment has the function of automatic swinging. When the first rotational axis 31 or the second rotational axis 21 is rotated back and forth manually or by maneuvering, the wind direction can be swung in the up-down direction or the left-right direction.

In the embodiment, because of the limitation of the installation space, the first air duct and the second air duct are asymmetrically arranged. By adjusting the ratio of the inner diameter of the first air duct and the second air duct, or the degree of curvature of the first air duct and the second air duct, or the length of the first air duct and the second air duct to regulate a flow and a direction of the fluid flowing out of the first air outlet 62 and the second air outlet 72, and finally achieve the function of offsetting each other, or guiding the wind upwards, or guiding the wind downwards.

In other embodiments, the first air duct and the second air duct in the air outlet device are symmetrical. The second air duct 7 and the first air duct 6 are symmetrically arranged to ensure the direction of the fluid flowing out the first air outlet 62 and the second air outlet 72 is also symmetrical with a flat surface, and the fluid can be offset or partially offset in the second direction to achieve the adjusting the wind in the second direction. A flat surface refers to a surface perpendicular to the cross section in Fig. 1. Further, the entire air outlet device is symmetrically arranged with the flat surface. The first air outlet 62 and the second air outlet 72 are symmetrically arranged to further ensure that the direction of the fluid flowing out the first air outlet 62 and the second air outlet 72 is also symmetrical.

### Embodiment Two, in accordance with the present invention

The shape and structure of the first air duct and the second air duct in the air outlet device of the embodiment two and the first air duct and the second air duct in the embodiment one are substantially identical, and the same structures are denoted by the same reference and will not be described again. The following is just a description of the differences.

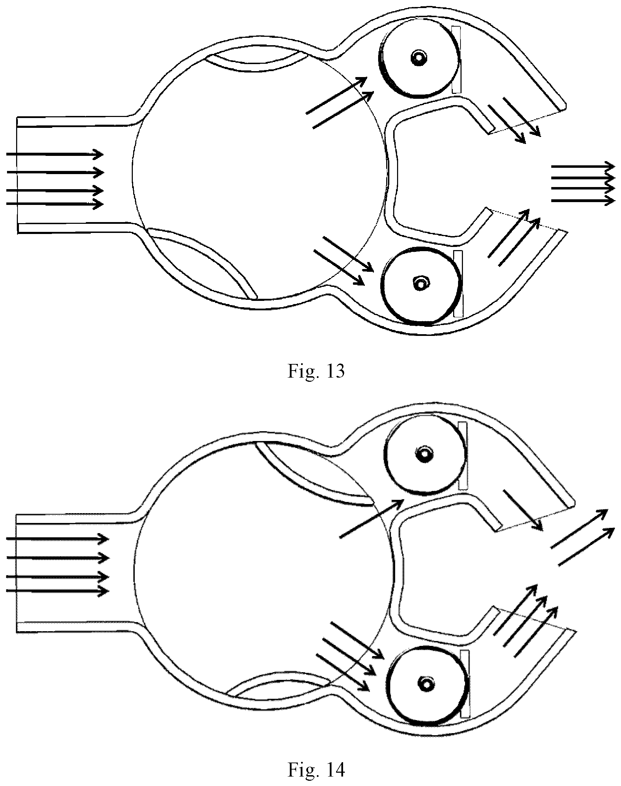

Please refer to Fig. 12-Fig. 23. A cross section in the cross-sectional view of Fig. 12 is parallel to a flowing direction of fluid inside an air outlet device, Fig. 13 to Fig. 18 are the schematic diagrams in the direction of the cross section in the cross-sectional view of Fig. 12, and an cross section of a direction adjustment structure 4 in Fig. 13 to Fig. 18 is perpendicular to the cross section in the cross-sectional view of Fig. 13. The direction of the black arrows in the figures refer to a flowing direction of fluid, and the number of arrows refers to a flow rate of the fluid.

In this embodiment, a shape of the air guiding structure 9 is the same as a shape of the air guiding chamber. The air guiding structure 9 has a round shape on a cross section, and there are two cover members which are in an arc shape. One cover member 92 has a length greater than or is equal to the inner diameter of the first air inlet, and the length of the other the cover member 91 is greater than or equal to the inner diameter of the overall air inlet. In this embodiment, the length of the one cover member 92 is smaller than the length of the other cover member 91. In this embodiment, a volume of the air guiding structure is approximately equal to a volume of the air guiding chamber. The principle of using the curved first air duct 6, the curved second air duct 7, and the air guiding structure 9 is as follows:
As shown in Fig. 13, when the two cover members do not cover the first air outlet, the second air outlet, and the overall air inlet at all, S1: S2 is equal to or approximately equal to 1, as shown in Fig. 13. The fluid flowing out the first air outlet 62 and the second air outlet 72 cancels each other in the second direction (up-down direction) and is finally blown out horizontally.

As shown in Fig. 14, rotate the air guiding structure 9 a small angle counterclockwise or clockwise, most of the first air outlet 62 is closed by one of the cover members 91, and the first air outlet, the second air outlet, and the overall air inlet are not closed by the other cover member 92 at all, so most of the air is assigned to the second air duct and S1: S2 is much smaller than 1. Due to the curved first air duct and the curved second air duct, a small part of the air of the first air duct is offset, so the wind direction at the final outlet is still at an upward angle.

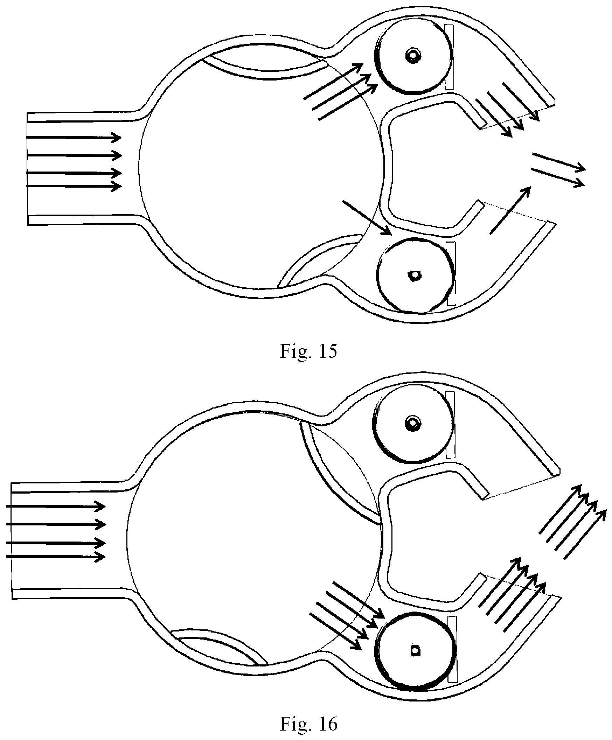

As shown in Fig. 15, rotate the air guiding structure 9 a small angle counterclockwise or clockwise, most of the second air outlet is closed by one of the cover members 91, and the first air outlet, the second air outlet, and the overall air inlet are not closed by the other cover member 92 at all, so most of the air is assigned to the first air duct and S1: S2 is much bigger than 1. Due to the curved first air duct 6 and the curved second air duct 7, a small part of the air of the second air duct is offset, so the wind direction at the final outlet is still at a downward angle.

As shown in Fig. 16, rotate the air guiding structure 9 a small angle counterclockwise or clockwise, the first air outlet 62 is totally closed by one of the cover members 91, and the first air outlet, the second air outlet, and the overall air inlet are not closed by the other cover member 92 at all, so all the air is assigned to the second air duct and S1=0. At this time, the wind blown out will blow upward at the maximum limit angle to achieve an effect of blowing up, and finally realize the upward air guiding function.

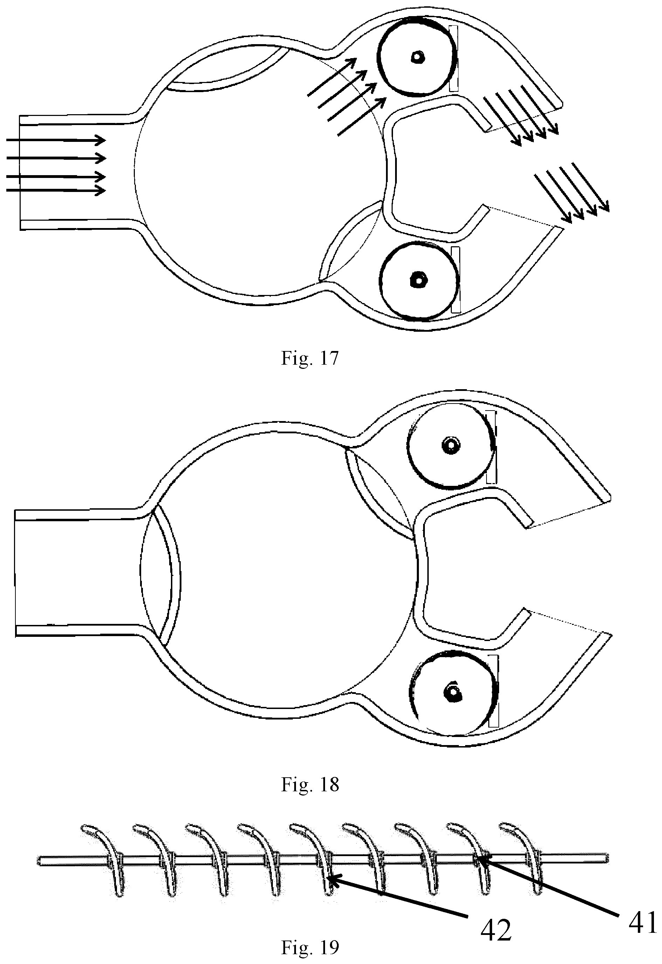

As shown in Fig. 17, rotate the air guiding structure 9 a small angle counterclockwise or clockwise, the second air outlet is totally closed by one of the cover members 91, and the first air outlet, the second air outlet, and the overall air inlet are not closed by the other cover member 92 at all, so all the air is assigned to the first air duct and S2=0. At this time, the wind blown out will blow downward at the maximum limit angle to achieve an effect of blowing down, and finally realize the downward air guiding function.

As shown in Fig. 18, when the air guiding structure 9 is rotated to completely close overall air inlet by the other cover member 91, the air outlet is closed at this time.

In this embodiment, a center axis of the two cover members are not on the same line.

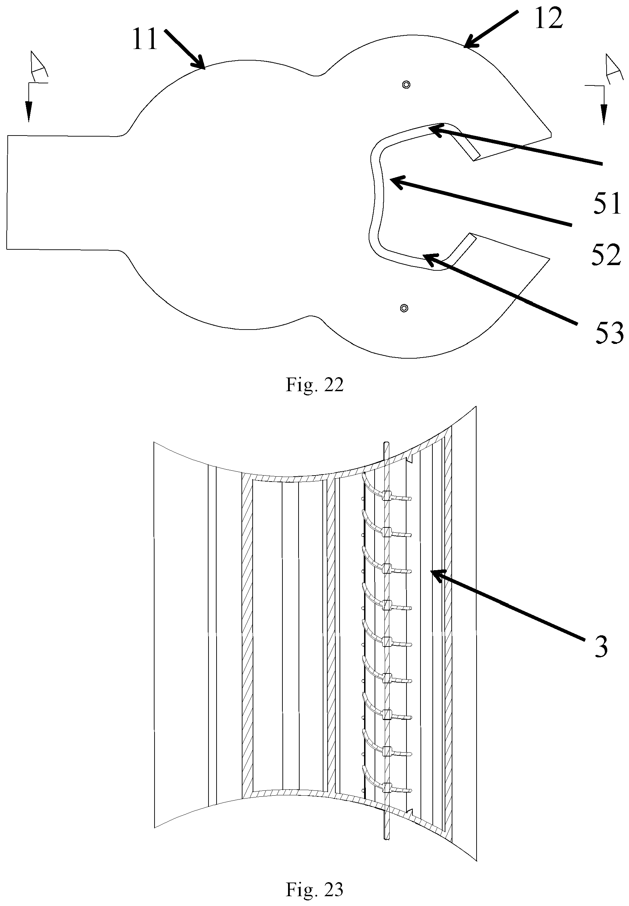

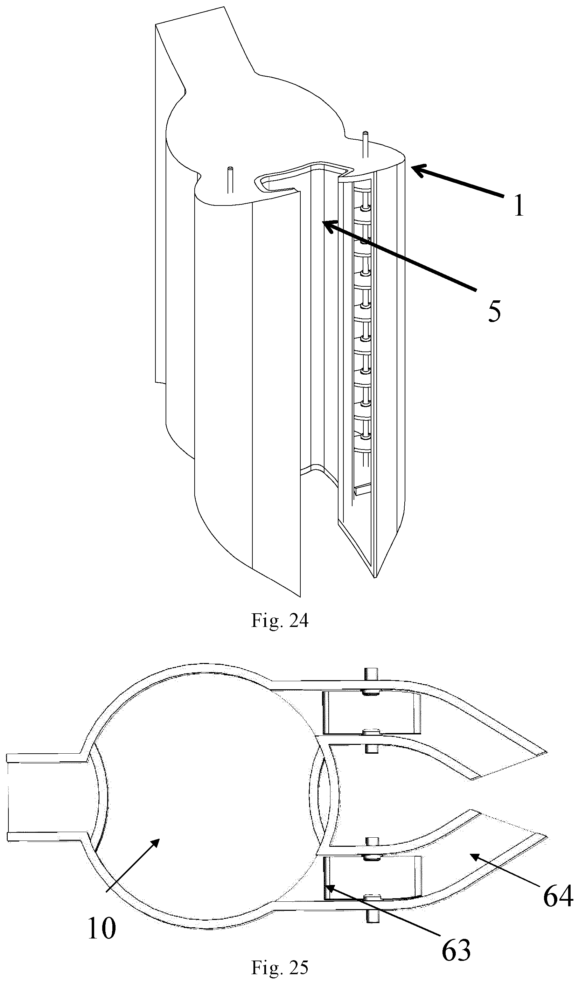

In this embodiment, each direction adjustment structure 4 includes vanes 42 and a second rotational axis 41. Each of the second rotational axis 41 is provided with vanes 42, and the vanes 42 disposed at each of the second rotational axis 41 rotate with the rotation of the second rotational axis 41. The second rotational axis 41 is parallel to the first rotational axis. Each of the vanes 42 of the present embodiment has a spiral shape, each of the outer edges has a different curvature, and can be rotated around their own axis to achieve a wind guiding effect. Meanwhile, the first housing and the second housing in this embodiment are concave (as shown in Fig. 23 and Fig. 24), that is, the first housing and the second housing are recessed toward the air guiding chamber to achieve a smooth wind guide. The first housing and the second housing cooperate to realize the function of the left-right direction air guiding.

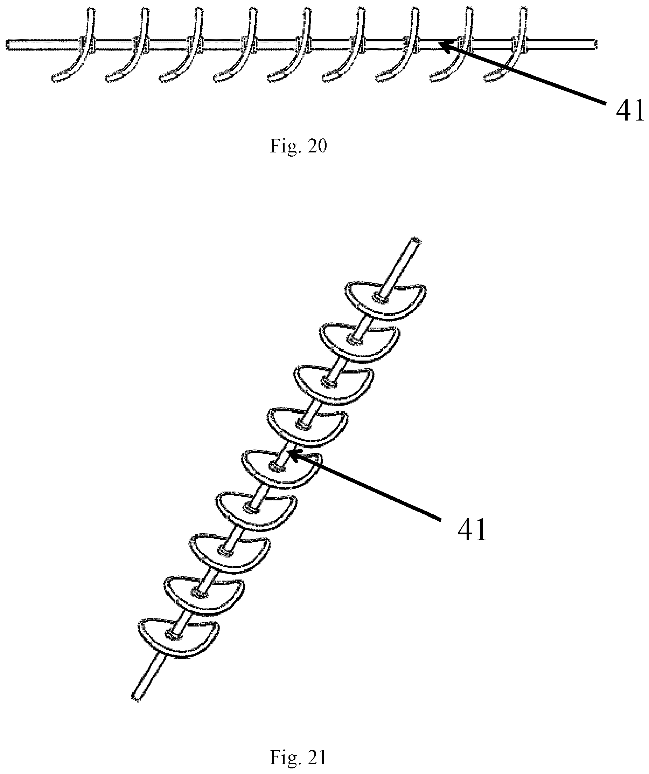

When the vanes 42 are all turned to the angles described in Fig. 19, the airflow is blown to the left. When the vanes 42 are all turned to the angles described in Fig. 20, the airflow is blown to the right.

### Embodiment Three, not in accordance with the present invention

The shape and structure of the air guiding structure in the air outlet device of the embodiment three and the air guiding structure in the embodiment two are substantially identical, and the same structures are denoted by the same reference and will not be described again. The following is just a description of the differences.

Please refer to Fig. 25 to 28. The first air duct and the second air duct in the air outlet device of this embodiment both have two sections, a parallel section 63 and a bending section 64. The parallel section 63 is always parallel to the overall air inlet, and the bending section 64 is set for bending. The direction adjustment structure is disposed in the parallel section 63.

In this embodiment, center axis of two cover members of the air guiding structure 10 are on the same line. The length of arc of one cover member is less than the length of the third section, but the length of arc is greater than the inner diameter of the first air inlet and the second air inlet. The length of arc of the other one of the cover member is greater than the inner diameter of the overall air inlet.

As shown in Fig. 25, when one cover member of the air guiding structure 10 close the overall air inlet, the other the cover member is located at the third section, the air outlet is closed at this time.

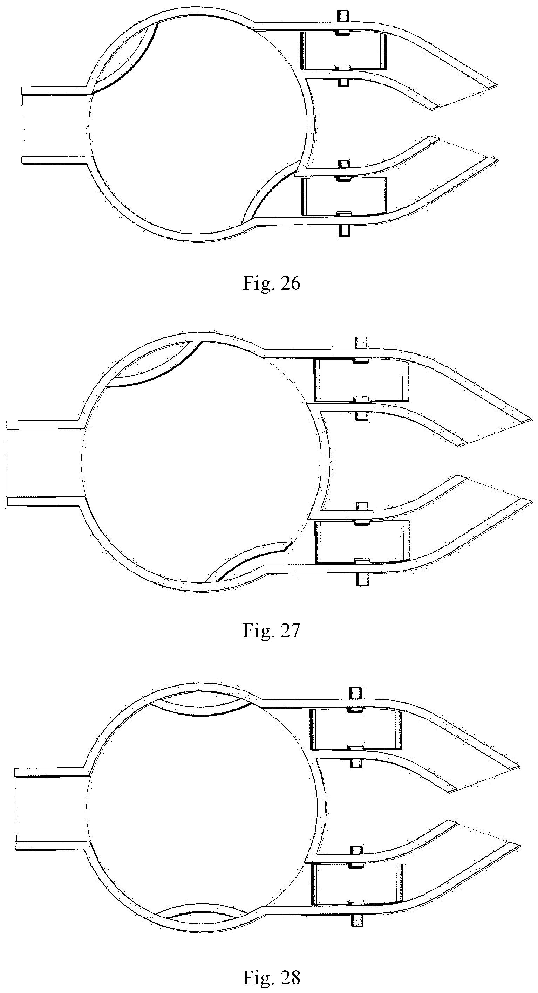

As shown in Fig.26, rotate the air guiding structure 10 a small angle clockwise, the second air outlet is totally closed by one of the cover members, and the first air outlet, the second air outlet, and the overall air inlet are not closed by the other cover member at all, so all the air is assigned to the first air duct and S2=0. At this time, the wind blown out will blow downward at the maximum limit angle to achieve an effect of blowing down, and finally realize the downward air guiding function.

Rotate the air guiding structure 10 a small angle counterclockwise, the first air outlet is totally closed by one of the cover members, and the first air outlet, the second air outlet, and the overall air inlet are not closed by the other cover member at all, so all the air is assigned to the second air duct and S1=0. At this time, the wind blown out will blow upward at the maximum limit angle to achieve an effect of blowing up, and finally realize the upward air guiding function.

As shown in Fig. 27, rotate the air guiding structure 10 a small angle clockwise, most of the second air outlet is closed by one of the cover members, and the first air outlet, the second air outlet, and the overall air inlet are not closed by the other cover member at all, so most of the air is assigned to the first air duct and S1: S2 is much bigger than 1. Due to the curved first air duct and the curved second air duct, a small part of the air of the second air duct is offset, so the wind direction at the final outlet is still at a downward angle.

Rotate the air guiding structure a small angle counterclockwise, most of the first air outlet is closed by one of the cover members, and the first air outlet, the second air outlet, and the overall air inlet are not closed by the other cover member at all, so most of the air is assigned to the second air duct and S1: S2 is much smaller than. Due to the curved first air duct and the curved second air duct, a small part of the air of the first air duct is offset, so the wind direction at the final outlet is still at an upward angle.

As shown in Fig. 28, rotate the air guiding structure 10 a small angle again, both two cover members do not close the first air outlet, the second air outlet, and the overall air inlet at all, the fluid flowing out the first air outlet 62 and the second air outlet 72 cancels each other in the second direction (up-down direction) and is finally blown out horizontally.

In summary, the present invention does not need to use the secondary vanes of the prior art, and utilizes the curved first air duct and the curved second air duct to guide the wind, which brings the aesthetic effect of concealing the outlet while reducing the development cost of the secondary vanes.

The air guiding structure with a special structural shape cooperate with the first air duct and the second air duct. It not only regulates the upper or lower air guiding, but also realizes the function of switching the wind.

The first housing and the second housing have a special shape, the inner wall is concave, and the air guiding structure is assisted. The opening of the first air duct and the second air duct is diagonally opposite, shielding the vanes, and achieving a hidden effect perfectly.

It should be understood by those skilled in the art that in the disclosure of the present invention, the terms "longitudinal", "transverse", "upper", "lower", "front", "back", "left", "right", " "upright", "horizontal", "top", "bottom", "inside", "outside", etc. indicates the orientation or positional relationship, based on the orientation or positional relationship shown in the drawings, which is merely for the convenience of describing the present invention, rather than indicates or implies that the device or component referred must have a particular orientation, be constructed and operated in a particular orientation. Therefore, the above description of the invention is not to be construed as a limitation of the invention.

## Claims

1. An air outlet device, comprising:
a first air duct (6), having a first air inlet (61) and a first air outlet (62);
a second air duct (7), having a second air inlet (71) and a second air outlet (72);
an air guiding structure (9), used for adjusting a relative size of the first air inlet (61) and the second air inlet (71); and
two direction adjustment structures (4), wherein the first air duct (6) and the second air duct (7) both are provided with one direction adjustment structure (4) to adjust a first direction of an air out of the first air outlet (62) and the second air outlet (72);
wherein the air outlet device further comprises a first housing (1) and a second housing (5), wherein the second housing (5) has a first section (51) and a second section (53), the first section (51) and the first housing (1) cooperate with each other to form the first air duct (6), and the second section (53) and the first housing (1) cooperate with each other to form the second air duct (7);
wherein the second housing (5) further comprises a third section (52), two ends of the third section (52) being connected to the first and second sections (51, 53) respectively, the third section (52) and the air guiding structure (9) cooperate with each other to adjust the relative size of the first air inlet (61) and the second air inlet (71);
the first housing (1) comprises an air guiding section (11) and an air duct section (12), the third section (52) and the air guiding section (11) of the first housing (1) cooperate with each other to form an air guiding chamber, a shape of a cross section of the air guiding section (11) is round or nearly round;
the air outlet device further comprises an overall air inlet (8), the air guiding chamber being in communication with the overall air inlet (8), the first air inlet (61), and the second air inlet (71) respectively; the first section (51) and the air duct section (12) of the first housing (1) cooperate with each other to form the first air duct (6), the second section (53) and the air duct section (12) of the first housing (1) cooperate with each other to form the second air duct (7);
the air guiding structure (9) is disposed in the air guiding chamber, the air guiding structure (9) comprises a cover member (91, 92), the air guiding structure (9) has a first rotational axis, and the air guiding structure (9) is rotatable disposed about the first rotational axis to achieve the function of the cover member (91, 92) to close or partially close or open the overall air inlet (8), the first air inlet (61), and the second air inlet (71); and
each of the said direction adjustment structures (4) comprises a plurality of vanes (42) and a second rotational axis (41), **characterized in that** all the vanes (42) of each of the said direction adjustment structures (4) are disposed at the respective second rotational axis (41), the vanes (42) rotate with a rotation of the respective second rotational axis (41), and both second rotational axes (41) are parallel to the said first rotational axis (31).

2. An air outlet device according to claim 1, wherein the first air duct (6) and the second air duct (7) both are curved, an end of the first air duct (6) bend towards the second air duct (7), and an end of the second air duct (7) bend towards the first air duct (6).

3. An air conditioning system, comprising the air outlet device according to any of claim 1-2, wherein the air conditioning system has an outlet, and the first air inlet (61) and the second air inlet (71) both are in communication with the outlet.

4. A vehicle, comprising the air outlet device according to any of claim 1-2, wherein the vehicle further comprises an air conditioning system and a vehicle interior, the air conditioning system has an outlet, the first air inlet (61) and the second air inlet (71) both are in communication with the outlet, and the first air outlet (62) and the second air outlet (72) both are disposed at the vehicle interior.

## Patentansprüche

1. Luftauslassvorrichtung, umfassend:
einen ersten Luftkanal (6), der einen ersten Lufteinlass (61) und einen ersten Luftauslass (62) aufweist;
einen zweiten Luftkanal (7), der einen zweiten Lufteinlass (71) und einen zweiten Luftauslass (72) aufweist;
eine Luftleitstruktur (9), die zum Justieren einer relativen Größe des ersten Lufteinlasses (61) und des zweiten Lufteinlasses (71) verwendet wird; und
zwei Richtungsjustierstrukturen (4), wobei der erste Luftkanal (6) und der zweite Luftkanal (7) beide mit einer Richtungsjustierstruktur (4) versehen sind, um eine erste Richtung einer Luft aus dem ersten Luftauslass (62) und dem zweiten Luftauslass (72) zu justieren;
wobei die Luftauslassvorrichtung ferner ein erstes Gehäuse (1) und ein zweites Gehäuse (5) umfasst, wobei das zweite Gehäuse (5) einen ersten Abschnitt (51) und einen zweiten Abschnitt (53) aufweist, wobei der erste Abschnitt (51) und das erste Gehäuse (1) miteinander zusammenwirken, um den ersten Luftkanal (6) zu bilden, und der zweite Abschnitt (53) und das erste Gehäuse (1) miteinander zusammenwirken, um den zweiten Luftkanal (7) zu bilden;
wobei das zweite Gehäuse (5) ferner einen dritten Abschnitt (52) umfasst, wobei zwei Enden des dritten Abschnitts (52) mit dem ersten bzw. dem zweiten Abschnitt (51, 53) verbunden sind, wobei der dritte Abschnitt (52) und die Luftleitstruktur (9) miteinander zusammenwirken, um die relative Größe des ersten Lufteinlasses (61) und des zweiten Lufteinlasses (71) zu justieren;
das erste Gehäuse (1) einen Luftleitabschnitt (11) und einen Luftkanalabschnitt (12) umfasst, wobei der dritte Abschnitt (52) und der Luftleitabschnitt (11) des ersten Gehäuses (1) miteinander zusammenwirken, um eine Luftleitkammer zu bilden, wobei eine Form eines Querschnitts des Luftleitabschnitts (11) rund oder annähernd rund ist;
die Luftauslassvorrichtung ferner einen Gesamtlufteinlass (8) umfasst, wobei die Luftleitkammer in Kommunikation mit dem Gesamtlufteinlass (8), dem ersten Lufteinlass (61) bzw. dem zweiten Lufteinlass (71) steht; wobei der erste Abschnitt (51) und der Luftkanalabschnitt (12) des ersten Gehäuses (1) miteinander zusammenwirken, um den ersten Luftkanal (6) zu bilden, wobei der zweite Abschnitt (53) und der Luftkanalabschnitt (12) des ersten Gehäuses (1) miteinander zusammenwirken, um den zweiten Luftkanal (7) zu bilden;
die Luftleitstruktur (9) in der Luftleitkammer angeordnet ist, wobei die Luftleitstruktur (9) ein Abdeckungselement (91, 92) umfasst, wobei die Luftleitstruktur (9) eine erste Drehachse aufweist und die Luftleitstruktur (9) drehbar um die erste Drehachse angeordnet ist, um die Funktion des Abdeckungselements (91, 92) zu erzielen, um den Gesamtlufteinlass (8), den ersten Lufteinlass (61) und den zweiten Lufteinlass (71) zu schließen oder partiell zu schließen oder zu öffnen; und
jede der besagten Richtungsjustierstrukturen (4) eine Vielzahl von Flügeln (42) und eine zweite Drehachse (41) umfasst, **dadurch gekennzeichnet, dass** alle Flügel (42) jeder der besagten Richtungsjustierstrukturen (4) an der jeweiligen zweiten Drehachse (41) angeordnet sind, die Flügel (42) sich mit einer Drehung der jeweiligen zweiten Drehachse (41) drehen und beide zweiten Drehachsen (41) parallel zu der besagten ersten Drehachse (31) sind.

2. Luftauslassvorrichtung nach Anspruch 1, wobei der erste Luftkanal (6) und der zweite Luftkanal (7) beide gewölbt sind, ein Ende des ersten Luftkanals (6) sich zu dem zweiten Luftkanal (7) hin biegt und ein Ende des zweiten Luftkanals (7) sich zu dem ersten Luftkanal (6) hin biegt.

3. Klimaanlage, umfassend die Luftauslassvorrichtung nach einem der Ansprüche 1-2, wobei die Klimaanlage einen Auslass aufweist und der erste Lufteinlass (61) und der zweite Lufteinlass (71) beide in Kommunikation mit dem Auslass stehen.

4. Fahrzeug, umfassend die Luftauslassvorrichtung nach einem der Ansprüche 1-2, wobei das Fahrzeug ferner eine Klimaanlage und einen Fahrzeuginnenraum umfasst, die Klimaanlage einen Auslass aufweist, der erste Lufteinlass (61) und der zweite Lufteinlass (71) beide in Kommunikation mit dem Auslass stehen und der erste Luftauslass (62) und der zweite Luftauslass (72) beide in dem Fahrzeuginnenraum angeordnet sind.

## Revendications

1. Dispositif de sortie d'air, comprenant :
un premier conduit d'air (6), présentant une première entrée d'air (61) et une première sortie d'air (62) ;
un second conduit d'air (7), présentant une seconde entrée d'air (71) et une seconde sortie d'air (72) ;
une structure de guidage d'air (9), utilisée pour régler une taille relative de la première entrée d'air (61) et de la seconde entrée d'air (71) ; et
deux structures de réglage de direction (4), dans lequel le premier conduit d'air (6) et le second conduit d'air (7) sont tous deux dotés d'une structure de réglage de direction (4) pour régler une première direction d'un air sortant de la première sortie d'air (62) et de la seconde sortie d'air (72) ;
dans lequel le dispositif de sortie d'air comprend en outre un premier boîtier (1) et un second boîtier (5), dans lequel le second boîtier (5) présente une première section (51) et une deuxième section (53), la première section (51) et le premier boîtier (1) coopèrent entre eux pour former le premier conduit d'air (6), et la deuxième section (53) et le premier boîtier (1) coopèrent entre eux pour former le second conduit d'air (7) ;
dans lequel le second boîtier (5) comprend en outre une troisième section (52), deux extrémités de la troisième section (52) étant reliées respectivement aux première et deuxième sections (51, 53), la troisième section (52) et la structure de guidage d'air (9) coopèrent entre elles pour régler la taille relative de la première entrée d'air (61) et de la seconde entrée d'air (71) ;
le premier boîtier (1) comprend une section de guidage d'air (11) et une section de conduit d'air (12), la troisième section (52) et la section de guidage d'air (11) du premier boîtier (1) coopèrent entre elles pour former une chambre de guidage d'air, une forme de section transversale de la section de guidage d'air (11) est ronde ou presque ronde ;
le dispositif de sortie d'air comprend en outre une entrée d'air globale (8), la chambre de guidage d'air étant en communication avec l'entrée d'air globale (8), la première entrée d'air (61) et la seconde entrée d'air (71) respectivement ; la première section (51) et la section de conduit d'air (12) du premier boîtier (1) coopèrent entre elles pour former le premier conduit d'air (6), la deuxième section (53) et la section de conduit d'air (12) du premier boîtier (1) coopèrent entre elles pour former le second conduit d'air (7) ;
la structure de guidage d'air (9) est disposée dans la chambre de guidage d'air, la structure de guidage d'air (9) comprend un organe de recouvrement (91, 92), la structure de guidage d'air (9) présente un premier axe de rotation, et la structure de guidage d'air (9) est disposée de manière rotative autour du premier axe de rotation pour atteindre la fonction de l'organe de recouvrement (91, 92) de fermer ou d'ouvrir partiellement l'entrée d'air globale (8), la première entrée d'air (61) et la seconde entrée d'air (71) ; et
chacune desdites structures de réglage de direction (4) comprend une pluralité d'aubes (42) et un second axe de rotation (41), **caractérisé en ce que** toutes les aubes (42) de chacune desdites structures de réglage de direction (4) sont disposées au niveau du second axe de rotation (41) respectif, les aubes (42) tournent avec une rotation du second axe de rotation (41) respectif, et les deux seconds axes de rotation (41) sont parallèles audit premier axe de rotation (31).

2. Dispositif de sortie d'air selon la revendication 1, dans lequel le premier conduit d'air (6) et le second conduit d'air (7) sont tous deux courbés, une extrémité du premier conduit d'air (6) se courbe vers le second conduit d'air (7), et une extrémité du second conduit d'air (7) se courbe vers le premier conduit d'air (6).

3. Système de climatisation, comprenant le dispositif de sortie d'air selon l'une quelconque des revendications 1 à 2, dans lequel le système de climatisation présente une sortie, et la première entrée d'air (61) et la seconde entrée d'air (71) sont toutes deux en communication avec la sortie.

4. Véhicule, comprenant le dispositif de sortie d'air selon l'une quelconque des revendications 1 à 2, dans lequel le véhicule comprend en outre un système de climatisation et un intérieur de véhicule, le système de climatisation présente une sortie, la première entrée d'air (61) et la seconde entrée d'air (71) sont toutes deux en communication avec la sortie, et la première sortie d'air (62) et la seconde sortie d'air (72) sont toutes deux disposées à l'intérieur du véhicule.
